# EUROPEAN PATENT APPLICATION

(11) **EP 2 965 851 A1**
(43) Date of publication of application: **13.01.2016**
(21) Application number: 14468007.1
(22) Date of filing: 11.07.2014
(51) Int. Cl.: B23K 20/12, B23Q 17/00, G08B 21/18

(54) **Friction stir welding process with an offline tool breakage detection**

(71) Applicant: NELA Razvojni center d.o.o. Podruznica Vincarje, 4220 Skofja Loka (SI)
(72) Inventor: Muhic, Tadej, 8000 Novo mesto (SI); Kumer, Miha, 1000 Ljubljana (SI); Podlipnik, Gregor, 4220 Skofja Loka (SI); Megusar, Andrej, 4227 Selca (SI)
(74) Representative: Macek, Gregor

(57) **Abstract**

The present invention provides a method of friction stir welding with detection of a tool (2, 15) breakage detection on an automated friction stir welding machine. The problem is solved with the integration of a laser distance measurement system (13), which is employed at the end of the welding sequence to verify the presence of a tool exit hole (16). Also presented is an automatic execution of a subprogram which enables the exclusion of non acceptable, i.e. N.O.K., parts in which a tool (2, 15) breakage incident occurred.

## Description

### FIELD OF INVENTION

The present invention relates to offline tool breakage detection in the friction stir welding process (FSW) and automated marking of N.O.K pieces. This disclosure generally relates to an automated process and equipment for FSW and deals more particularly with a system for the detection of tool breakage events and reaction thereto.

### BACKGROUND OF INVENTION

Friction stir welding (FSW) process belongs to the category of solid-phase joining methods. This means that only downward pressure and rotating action of the welding tool is used for the welding process. The welding tool consists of a pin part that has a special helical structure and is pressed inside the material being joined under rotating motion and thus producing frictional heat between the tool surface and the work piece. Furthermore, rotating motion of the pin induces mixing and displacement of material in the weld region. A shoulder part of FSW tool assists in intermixing the plasticized region, pushing the material downwards and preventing the displaced material from moving out of the tool region.

Due to applied mechanical deformation and rotating action of the welding tool, the material inside the weld region of two welded members is pressured and stirred together along the entire length of the seam. In this way a permanent weld is created.

The FSW process has many advantages and can be applied for various materials types, especially for combining two materials of different type. A detailed description of the FSW process is found in European patent EP 0752926 B1.

Many solutions for assuring weld quality with different sensor types are described in different patents. Numerous references describe FSW systems equipped with sensors for monitoring and controlling the FSW process parameters in order to achieve high-quality welds. U.S. Pat. No. 5,893,507 and International Patent Application No. WO 00/02704, for example, describe FSW systems that monitor and/or control pressure at the FSW tool tip using pressure sensors. US patent No. 6,050,475 describes a method of maintaining constant pressure at the FSW tool tip by using the current of a drive motor to estimate the actual pressure. US patent No. 6,299,050 describes a FSW system that monitors and controls the distance between the FSW tool and the work piece by using a sensor just ahead of the moving FSW tool. International Patent Application No. WO 98/13167 describes a FSW system that uses an ultrasonic device to measure variations in the thickness of the work pieces in order to control the distance between the FSW tool and the work pieces.

Other more complex solutions for gathering multiple welding parameter and automatic real time correction data based on pre-set logic are described in US 8,544,714 B1, US 7,992,761 B2, US 8,556,156 B1, EP2094428, WO 2012/133411 and DE 102005 032 170A1.

The most critical welding defect, which always results in weld fracture in operational use, is an insufficient depth of the weld due to the fracture of the welding tool (pin) during the welding procedure. This phenomenon is hardly noticeable from the appearance of the weld surface. Inherent to the FSW process and one of its disadvantages is the presence of imprint of the tool at the end of welding trajectory. Dimensions of the exit hole of the tool can also be successfully used for detecting the integrity of the welding tool. For detection of dimensions of the exit hole of the tool, i.e. the tool imprint, a special laser distance sensor mounted on a spindle head is utilized in present invention.

There exists a need to develop an offline technique for immediate determination of tool breakage after the end of the FSW process and to develop an automatic reaction to a tool breakage alarm. The main goal is to implement a fast measuring technique to minimize cycle time in a high runner serial welding production. There is no known application of detection of offline tool breakage based on analyses of the weld's exit hole dimensions. Secondly, there exists a need to develop an automatic sub-program execution upon the occurrence of pieces with broken tools and consequent weld defects. Embodiments of the disclosure are directed towards satisfying this need.

### BRIEF SUMMARY OF INVENTION

### Problem to be solved by the invention

An object of present invention is to provide a solution for determination of tool integrity using a laser dimensional measurement procedure of the tool exit hole in FSW procedure, and to provide a logic reaction of CNC-controller upon a tool breakage fault to prevent N.O.K. pieces from entering further production steps. N.O.K pieces in this case represent pieces with inclusion of a broken pin and consequent insufficient weld dimensions.

### DESCRIPTION OF THE DRAWINGS

FIG 1 presents an isometric illustration of FSW machine, clamping device, welded piece and an integrated laser distance measurement system.
FIG 2 presents a schematic perspective and cross-sectional view A-A of the exit hole of the welding tool in case of full integrity of the welding tool, determined with a laser distance measuring sequence.
FIG 3 presents a schematic perspective and cross-sectional view A-A of the exit hole of the welding tool in case of damaged integrity of the welding tool, determined with a laser distance measuring sequence.
FIG 4 presents a schematic representation of tool breakage identification method: a) Direct measurement of tool integrity on a conventional laser system (Prior art); b) Indirect measurement of tool integrity through the measurement of the exit hole of tool imprint.

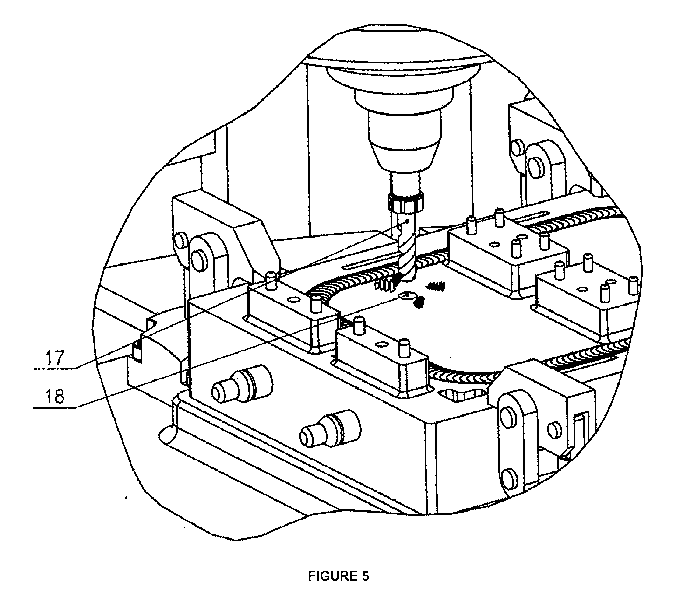

FIG 5 presents an isometric illustration of a FSW machine during the procedure of drilling through the piece with a broken pin inside the welding trajectory to prevent a N.O.K. piece from entering further production steps.

### DETAILED DESCRIPTION OF THE INVENTION

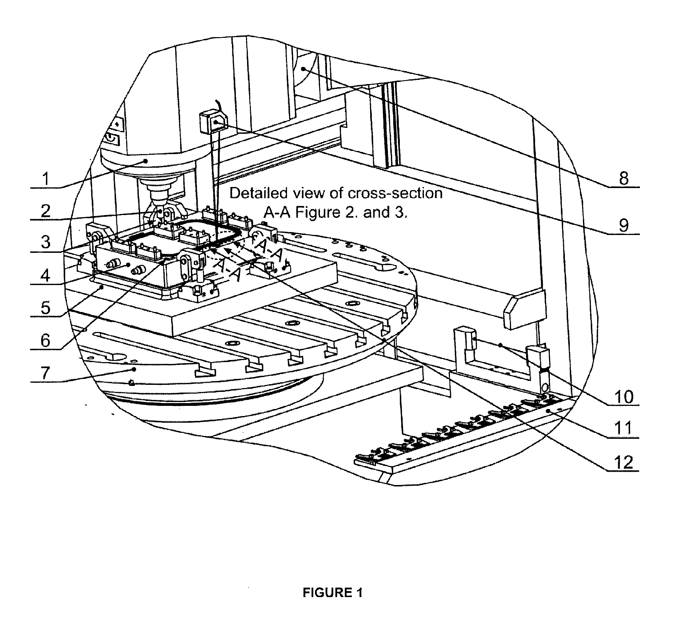

The present invention provides a novel tool verification technique for checking tool integrity through measurement of the exit hole height. Figure 1 illustrates different components of the FSW machine. The FSW machine is based on a modified CNC milling center with spindle head 1; rotary table 7 and swivel head 8, combined with x-, y- and z-axes to enable five-axis welding procedures. A conventional laser measurement device 10 to check tool breakage is stationed near the tool magazine 11. A laser distance measurement device 9 of present invention is mounted on the spindle head. The FSW welding process uses a specially designed welding tool assembly of a shoulder 2 and a pin 3. On the machine rotary table 7, a clamping device 5 is positioned. The piece to be welded is positioned on the clamping device 5. In this particular example, the welded piece is a two-part cooler assembly 4. These two parts of the cooler assembly 4 are to be welded together.

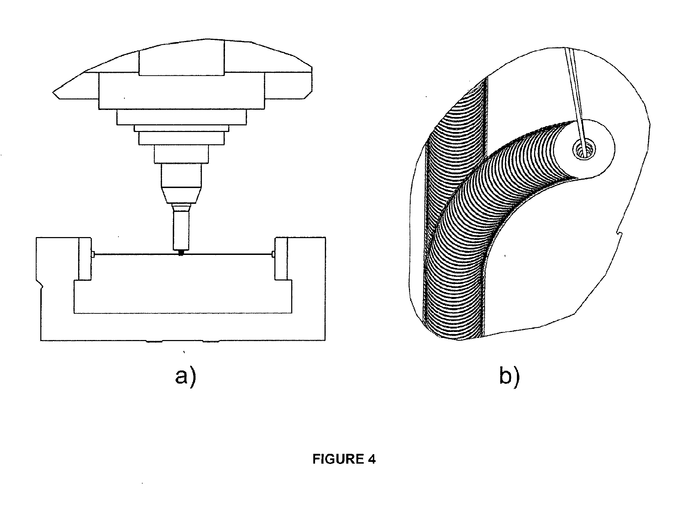

In a conventional FSW process, the imprint of the welding tool remains on the surface of the piece at the end of welding trajectory 12. The imprint of the welding tool is considered to be an imperfection and represents a defect in the form of cylindrical hole. A certain solution for the elimination of this effect was introduced by retractable pin tools for FSW. Most FSW applications are running with a conventional tool assembly. To reduce the impact of the exit hole presence on the quality of the weld, a welding strategy can be designed in a way that the exit hole position is moved out of the critical area on so called run-off plates or out of the joint area into full material, as presented in Fig. 4 b.

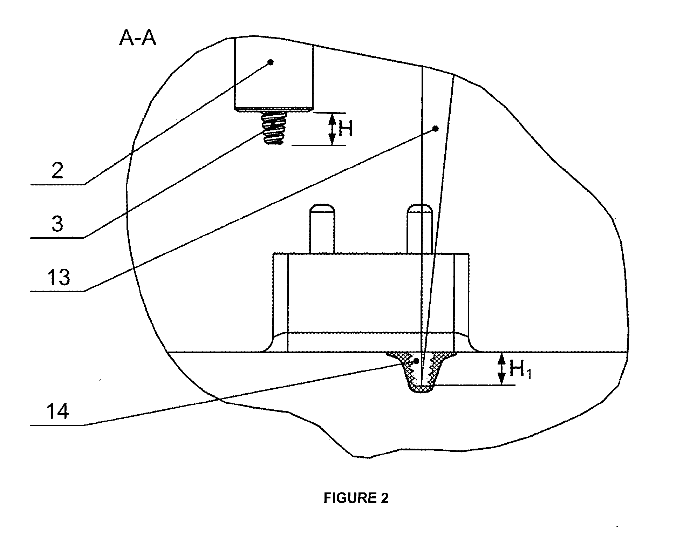

The tool imprint phenomenon can also be used for optimized detection of tool breakage in terms of cycle time reduction by means of a tool checking procedure. For weld quality assurance in serial production, it is very important to maintain control over the length H of pin 3 from piece to piece as presented in Fig. 2. The designed length of pin 3 assures penetration depth H₁ and consequent weld dimensions that ensure the designed strength of the weld.

The welding tool, especially its part called pin 3, is subjected to high stresses generated during the tool's travel across the welding trajectory. In the serial production, pins break off randomly after a certain quantity of finished parts. Tool breakage, i.e. broken pin 15, can be automatically indentified by controlling the integrity of the tool. A known solution is a conventional laser measurement station 10 positioned near the tool magazine 11. This means that the machine has to move the spindle head 1 towards the conventional laser measurement station 10 and measure the actual tool, i.e. broken pin 15 dimensions. This checking sequence takes time and is not an optimal solution for high-throughput FSW production, especially when using welding machines with two welding stations.

The object of the invention is the implementation of a laser distance measurement system 9, mounted on spindle head 1 to perform the checking procedure of appropriate welding tool imprint hole dimension at the end of the welding trajectory 12. In Figure 2, cross-sectional view A-A, a distance laser measurement of the imprint of exit hole 14 is presented. At the end of a welding sequence, the spindle head 1 is positioned in a way that the laser beams 13 are directly above the exit hole 14 of the weld. If the length H of the pin 3 is correct, the depth H₁ of the exit hole 14 shall be inside specifications and welding can continue with no unnecessary machine movements with the next part to be welded.

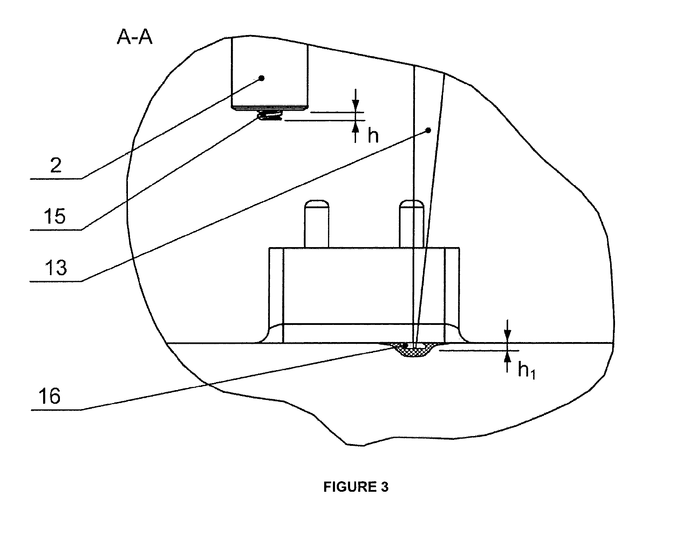

In Figure 3, cross-sectional view A-A, a welding tool breakage somewhere on the welding trajectory 6 is presented. Breakage of the tool is represented at the end of the welding trajectory 12 with depth h₁ of the exit hole 16 and length h of the actual pin 15.

The present invention offers an indirect tool breakage checking sequence and a significant time reduction for the necessary tool check procedure.

The invention also relates to automatic reaction logic of CNC controller after the confirmation of a tool breakage. After the identification of tool breakage, the welding tool is deposited in a tool magazine 11. A drill tool 17 is then taken from the tool magazine and a hole 18 is drilled to identify the piece as N.O.K. In that way, a N.O.K. piece with a defective weld region characteristically differs from O.K. pieces with an adequate weld region. Upon subsequent weld surface machining, the hard inclusion remains of the pin material inside the weld region cannot destroy the milling tools. In an application of welding of cooler assembly, the N.O.K. parts will not pass the tightness test because of a hole drilled through a cooling channel.

## Claims

1. Offline tool breakage detection in a friction stir welding process on an automated 5-axis CNC machine, **characterized in that** the detection of a tool breakage event is performed at the end of the welding trajectory by measuring the depth of the exit hole on the welded piece with a spindle-head mounted laser, and marking of N.O.K. pieces.

2. Offline tool breakage detection according to claim 1, **characterized in that** the marking of N.O.K. welded pieces is performed by drilling a hole in the same.
